# EUROPEAN PATENT SPECIFICATION

(11) **EP 1 880 871 B1**
(45) Date of publication and mention of the grant of the patent: **06.07.2011**
(21) Application number: 06746323.2
(22) Date of filing: 02.05.2006
(51) Int. Cl.: B60C 5/14, B32B 25/04

(54) **MULTILAYER BODY AND PNEUMATIC TIRE USING SAME**
MEHRLAGIGER KÖRPER UND DIESEN VERWENDENDER LUFTREIFEN
CORPS MULTICOUCHE ET PNEUMATIQUE UTILISANT CELUI-CI

(30) Priority: 09.05.2005 JP 2005136070
(43) Date of publication of application: 23.01.2008
(73) Proprietor: The Yokohama Rubber Co., Ltd., Minato-ku Tokyo 105-8685 (JP)
(72) Inventor: KIRINO, Yoshiaki, THE YOKOHAMA RUBBER CO., LTD., Hiratsuka-shi, Kanagawa, 254-8601 (JP)
(74) Representative: Vossius & Partner
(86) International application number: PCT/JP2006/309526
(87) International publication number: WO 2006/121140

(56) References cited:
- EP-A- 0 774 340
- WO-A1-96/34736
- JP-A- 11 010 779
- JP-A- 11 010 779
- JP-A- 11 240 108
- JP-A- 11 240 108
- JP-A- 2000 247 108
- JP-A- 2000 272 023
- JP-A- 2002 030 187
- JP-A- 2005 068 173
- US-A1- 2004 031 550

## Description

### TECHNICAL FIELD

The present invention relates to a laminate and a pneumatic tire using the same, more particularly relates to a laminate of a thermoplastic elastomer layer and a rubber layer having improved adhesiveness suitable for an air barrier layer and a tie rubber layer and/or a carcass layer of a pneumatic tire and a pneumatic tire using the same.

### BACKGROUND ART

The technology of using a film of a thermoplastic resin and a thermoplastic elastomer composition for the inner liner (or an air permeation preventive layer) of a pneumatic tire is known (see, for example, Japanese Patent Publication (A) No. 10-25375). This film does not have a sufficient adhesiveness between a carcass layer and a tie rubber layer (i.e., buffer material between the carcass layer and the inner liner). Therefore, it has been proposed to coat or coextrude with the film an adhesive so as to secure the adhesiveness (see, for example, Japanese Patent No. 3320420 and Japanese Patent Publication (A) No. 11-240108).

As the adhesive used when producing a laminate of said thermoplastic elastomer film and a rubber, an ESBS (i.e., epoxy modified styrene-butadiene-styrene block copolymer), tackifier, peroxide (or thiuram-based vulcanization accelerator) are utilized. However, when materials are being developed for improving the gas barrier property of the thermoplastic elastomer film used as an inner liner, the thermoplastic elastomer per se is being changed to thicker and harder materials. Thus, development of a new adhesive, which can replace conventional adhesives, has become necessary.

### DISCLOSURE OF THE INVENTION

Accordingly, an object of the present invention is to solve the problem of securing said adhesiveness and to improve the adhesiveness of a thermoplastic elastomer layer (film) and a rubber layer (a tie rubber layer and/or a carcass layer) and remarkably improve the peeling resistance performance.

In accordance with the present invention, there are provided a laminate comprising a layer of a thermoplastic elastomer (A) comprising an elastomer component dispersed in a thermoplastic resin matrix, a layer of an adhesive composition (B) comprising 110 parts by weight of a styrene-based copolymer having double bonds, 0.5 to 10 parts by weight of a vulcanization agent and/or a thiuram-based vulcanization accelerator and 10 to 80 parts by weight of a reinforcing filler and a layer of an unvulcanized rubber composition (C), wherein the laminate is made integral at the time of vulcanization of rubber and a pneumatic tire using the same.

In accordance with the present invention, there are provided a laminate comprising a layer of a thermoplastic elastomer (A) comprising an elastomer component dispersed in a thermoplastic resin matrix, a layer of an adhesive composition (B') containing a styrene-based copolymer having double bonds and a 0.5 to 10 parts by weight, based upon 100 parts by weight of the styrene-based copolymer (B'), of a thiuram-based vulcanization accelerator and a layer of an unvulcanized rubber composition (C), wherein the laminate is made integral at the time of vulcanization of rubber and a pneumatic tire using the same.

According to the present invention, by compounding reinforcing filler conventionally used for rubber, such as carbon black, silica into the adhesive, the adhesiveness of the harder thermoplastic elastomer layer (or film) and a rubber layer can be improved. This is effective for the bonding of a tire use inner liner utilizing film.

The singular form used in the Description and the attached Claims should be understood as including the plural, except when otherwise clear from the context.

### BEST MODE FOR CARRYING OUT THE INVENTION

The inventors engaged in research to solve the above problems and, as a result, discovered that by making integral, at the time of vulcanization of rubber, a laminate comprising a thermoplastic elastomer (A) comprising an elastomer component dispersed in a thermoplastic resin matrix, an adhesive composition (B) containing a styrene-based copolymer having double bonds, a vulcanization agent and/or a vulcanization accelerator and further a reinforcing filler and an unvulcanized rubber composition (C), the peeling resistance between the layer of the thermoplastic elastomer (A) (including film, same hereinbelow) and the layer of rubber (C) is remarkably improved, whereby the present invention is completed.

The inventors further discovered that a laminate comprising a layer of a thermoplastic elastomer (A) comprising an elastomer component dispersed in a thermoplastic resin matrix, a layer of an adhesive composition (B') containing a styrene-based copolymer having double bonds and 0.5 to 10 parts by weight, based upon 100 parts by weight of that copolymer (B') of a thiuram-based vulcanization accelerator and a layer (C) of an unvulcanized rubber composition, which is made integral at the time of vulcanization of rubber, is superior in the peeling resistance performance between the layer of the thermoplastic elastomer (A) and the layer of the rubber (C).

The laminate according to the present invention is a laminate comprising a layer of a thermoplastic elastomer composition (A) comprising an elastomer dispersed in a matrix of a thermoplastic resin and a layer of an unvulcanized rubber composition (C) laminated together via a layer of an adhesive (B). The thermoplastic elastomer composition (A) preferably has an air permeation coefficient of 25×10⁻¹²cc·cm/cm²·sec·cmHg or less and a Young's modulus of 1 to 500 MPa. This thermoplastic elastomer (A) can be obtained by, for example, molding by extrusion molding, etc. a thermoplastic elastomer comprising a matrix (continuous phase) of at least one thermoplastic resin such as a polyamide-based resin, polyester-based resin, polynitrile-based resin, polymethacrylate-based resin, polyvinyl-based resin, cellulose-based resin, fluorine-based resin and imide-based resin, in which at least one elastomer such as a diene-based rubber or its hydrogenate, olefin-based rubber, halogen-containing rubber, silicone rubber, sulfur-containing rubber, fluororubber, thermoplastic elastomer, etc. is dispersed. Specifically, it can be obtained by preliminarily melt mixing the thermoplastic resin and the elastomer components by a twin-screw extruder, etc. to disperse the elastomer component in the thermoplastic resin, which forms the continuous phase. When vulcanizing the elastomer component, the vulcanization agent is added while mixing or the vulcanization agent is preliminarily blended into the elastomer component and the elastomer component is dynamically vulcanized. Further, the various types of compounding agents (excluding vulcanization agents) added to the thermoplastic resin and/or elastomer component may be added during the above mixing, but they are preferably mixed in beforehand before mixing. The kneading machine used for kneading the thermoplastic resin and elastomer component is not particularly limited. A screw extruder, kneader, Banbury mixer, twin-screw extruder, etc. may be mentioned, but among these, a twin-screw extruder is preferably used. Note that methods for production a film of the thermoplastic elastomer composition etc. are described in further detail in, for example, Japanese Patent Publication (A) No. 8-258506 and other documents. The present invention can also be carried out by the methods described in these publications.

As the matrix resin of the thermoplastic elastomer composition (A) comprising a thermoplastic matrix, in which an elastomer component is dispersed, according to the present invention, for example, polyamide-based resins (e.g., Nylon 6 (N6), Nylon 66 (N66), Nylon 46 (N46), Nylon 11 (N11), Nylon 12 (N12), Nylon 610 (N610), Nylon 612 (N612), Nylon 6/66 copolymer (N6/66), Nylon 6/66/610 copolymer (N6/66/610), Nylon MXD6 (MXD6), Nylon 6T, Nylon 6/6T copolymer, Nylon 66/PP copolymer, Nylon 66/PPS copolymer), and their N-alkoxyalkylates, for example a methoxymethylate of 6-Nylon, a methoxymethylate of 6-610-Nylon, a methoxymethylate of 612-Nylon, polyester-based resins (e.g., polybutylene terephthalate (PBT), polyethylene terephthalate (PET), polyethylene isophthalate (PEI0), PET/PEI copolymer, polyacrylate (PAR), polybutylene naphthalate (PBN), liquid crystal polyester, polyoxyalkylene diimidic acid/polybutylene terephthalate copolymer and other aromatic polyesters), polynitrile-based resins (e.g., polyacrylonitrile (PAN), polymethacrylonitrile, acrylonitrile/styrene copolymer (AS), methacrylonitrile/styrene copolymer, methacrylonitrile/styrene/butadiene copolymer), polymethacrylate-based resins (e.g., polymethyl methacrylate (PMMA), polyethyl methacrylate), polyvinyl-based resins (e.g., vinyl acetate, polyvinyl alcohol (PVA), vinyl alcohol/ethylene copolymer (EVOH), polyvinylidene chloride (PDVC), polyvinyl chloride (PVC), vinyl chloride/vinylidene chloride copolymer, vinylidene chloride/methyl acrylate copolymer, vinylidene chloride/acrylonitrile copolymer), cellulose-based resins (e.g., cellulose acetate, cellulose acetate butyrate), fluorine-based resins (e.g., polyvinylidene fluoride (PVDF), polyvinyl fluoride (PVF), polychlorofluoroethylene (PCTFE), tetrafluoroethylene /ethylene copolymer), imide-based resins (e.g., aromatic polyimide (PI)), etc. may be mentioned. These resins may be used alone or in any blend thereof.

On the other hand, as the elastomer present as a dispersed layer in the thermoplastic elastomer composition (A) of the present invention, for example, diene-based rubbers and their hydrogenates (e.g., NR, IR, epoxylated natural rubber, SBR, BR (high cis-BR and low cis-BR) and their maleate adducts, NBR, hydrogenated NBR, hydrogenated SBR), olefin-based rubbers (e.g., ethylene propylene rubber (EPDM,EPM), maleic acid modified ethylene propylene rubber (M-EPM), IIR, isobutylene and aromatic vinyl or diene-based monomer copolymers, acryl rubber (ACM), ionomer), halogen-containing rubbers (e.g., brominated butyl rubber (Br-IIR), chlorinated butyl rubber (Cl-IIR), a bromide of an isobutylene paramethylstyrene copolymer (Br-IPMS), chloroprene rubber (CR), hydrin rubber (CHR, CHC), chlorosulfonated polyethylene (CSM), chlorinated polyethylene (CM), maleic acid modified chlorinated polyethylene (M-CM)), silicone rubbers (e.g., methylvinyl silicone rubber, dimethyl silicone rubber, methylphenylvinyl silicone rubber), sulfur-containing rubbers (e.g., polysulfide rubber), fluororubbers (e.g., vinylidene fluoride-based rubbers, fluorine-containing vinylether-based rubbers, tetrafluoroethylene-propylene-based rubbers, fluorine-containing silicone-based rubbers and fluorine-containing phosphagen-based rubbers), thermoplastic elastomers (e.g., styrene-based elastomers, polyolefin-based elastomers, polyester-based elastomers, polyurethane-based elastomers, polyamide-based elastomers), etc. may be mentioned. These may be used alone or in any blends thereof.

The unvulcanized rubber composition (C) forming the laminate according to the present invention is a composition containing rubber component such as a diene-based rubber. This composition (C) may be, for example, formed into a sheet and laminated over the layer (film) of the composition (A) through an adhesive (B) to form a laminate. The laminate can be directly used as a carcass layer or tie rubber layer of a pneumatic tire for a conventional tire manufacturing process.

As the rubber component usable for the diene-based rubber composition (C) of the present invention, for example, any diene-based rubber capable of being used for tires etc. may be used, specifically, diene-based rubbers such as various types of natural rubbers (NR), various types of polybutadiene rubbers (BR), various types of polyisoprene rubbers (IR), various types of styrene-butadiene copolymer rubbers (SBR), acrylonitrile-butadiene copolymer rubbers (NBR), styrene-isoprene copolymer rubbers, styrene-isoprene-butadiene copolymer rubbers, or butyl rubber, halogenated butyl rubber, ethylene-propylene-diene copolymer rubber, etc. may be mentioned. These may be used alone or in any blend thereof. As a rubber component other than a diene-based rubber, an ethylene-propylene copolymer rubber, ethylene-octene copolymer rubber, etc. may be used.

The adhesive composition (B) usable for the laminate according to the present invention must have a ratio of the value of the 100% modulus with respect to the value of the 50% modulus after vulcanization satisfying the above requirement, that is, 1.41 to 2.45, preferably 1.62 to 1.89. If this ratio is small, a sufficient adhesiveness cannot be obtained, and, therefore, this is not preferable, while conversely if large, the processability of the adhesive composition is decreased, and, therefore, this is also not preferable. While not particularly limited, a conventional one may be used. As the styrene-based polymer having double bonds forming the adhesive composition of the present invention, for example any polymer generally used as an adhesive use polymer for a rubber layer etc. in the past, for example, an SBS (styrene-butadiene-styrene block copolymer), SIS (styrene-isoprene-styrene block copolymer), SEBS (styrene-ethylene-butadiene-styrene block copolymer),

SIBS (styrene-isoprene-butadiene-styrene block copolymer), or other polymer, into which a tackifier is compounded, may be obtained. A styrene-based polymer having double bonds improves the adhesiveness with a thermoplastic elastomer, and, therefore, part or all of the dienes are preferably epoxy-modified. Further, among these, an ESBS (epoxy-modified styrene-butadiene-styrene block copolymer) is preferable. Further, if necessary, it is also possible to use a blend of an epoxy-modified polymer and a unmodified polymer. The usable tackifier is not particularly limited. A general tackifier may be used. As specific examples, a terpene resin, modified terpene resin, pinene resin, terpene phenol resin, rosin-based resin, C5-based petroleum resin, C9-based petroleum resin, DCPD-based petroleum resin, styrene-based resin, coumarone resin, alkyl phenol resin, etc. may be mentioned. The compounding amount thereof is not particularly limited, but is preferably 10 to 200 parts by weight, more preferably 20 to 100 parts by weight or so, based upon 100 parts by weight of an adhesive polymer component.

The adhesive composition of the present invention also includes a vulcanization agent and/or a thiuram-based vulcanization accelerator and a reinforcing filler. As the vulcanization agent (a cross-linking agent) usable in the present invention, any vulcanization agent used for vulcanization of rubber in the past, for example, as sulfur-based ones, various types of sulfur (powdered sulfur, precipitated sulfur, insoluble sulfur, etc.), as peroxide-based ones, for example, benzoyl peroxide, t-butyl hydroperoxide, 2,4-dichlorodibenzoyl peroxide, 2,5-dimethyl-2,5-di(t-butylperoxy)hexane, 2,5-dimethylhexane-2,5-di(peroxybenzoate), etc. may be mentioned.

As the vulcanization accelerator compounded into the adhesive composition of the present invention tetramethyl thiuram disulfide, tetraethyl thiuram disulfide, tetrakis(2-ethylhexyl) thiuram disulfide, tetrabenzyl thiuram disulfide and their monosulfide compounds may be mentioned.

The compounding amount of the vulcanization agent and/or the vulcanization accelerator is not particularly limited, but 0.5 to 10 parts by weight, per 100 parts by weight of the styrene-based copolymer, are preferably 0.5 to 3 parts by weight, per 100 parts by weight of the styrene-based copolymer, are more preferably compounded. If the compounding amount is small, a sufficient adhesiveness is liable not to be obtained, while conversely if high, scorching is liable to be caused during processing.

According to the present invention, various types of carbon blacks, various types of silicas, and other reinforcing fillers widely used, in the past, for rubber are further blended into the adhesive composition. The type of these fillers are not particularly limited. The compounding amount is not particularly limited, but 10 to 80 parts by weight, per 100 parts by weight of styrene-based copolymer, is preferable, 10 to 30 parts by weight is more preferable.

The rubber composition according to the present invention may contain therein, in addition to the above components, carbon black, silica or another filler, a vulcanization or cross-linking agent, vulcanization or cross-linking accelerator, various types of oils, antioxidants, plasticizers, and other various types of additives generally used for tire use or other rubber composition use. These additives may be mixed by a general method to obtain a composition which is then used for vulcanization or cross-linking. The amounts of these additives may be made the conventional general amounts so long as the object of the present invention is not impaired.

### EXAMPLES

Examples will now be used to further explain the present invention, but the scope of the present invention is by no means limited to these Examples.

### Examples 1 to 18 and Comparative Example 1

### Preparation of Thermoplastic Elastomer Composition Layer (air barrier layer)

In each of the formulations shown in Table I, the compounding agents are charged into a twin-screw extruder, mixed at a set temperature of 200°C, extruded into strands having a diameter of about 3 mm, and processed into pellet shapes by a strand cutter. These were formed by a T-die having a width of 400 mm into a sheet shape having a thickness of 0.2 mm.

**Table I**

| | |
|---|---|
| Thermoplastic resin component | |
| Nylon 6/66 | Amylan CM6001 (made by 40 parts by weight Toray) |
| Elastomer component | |
| Br-IPMS | MDX90-10 (made by Exxon 60 parts by weight Mobil Chemical) |
| Vulcanization components | |
| Zinc white | Zinc White No. 3 (made 1 part by weight by Seido Chemical) |
| Stearic acid | Beads Stearic Acid (made 1 part by weight by NOF Corporation) |

### Preparation of Adhesive Composition Sample

In each of the formulations shown in Table II, the compounding agents are charged into a single-screw extruder, mixed at a set temperature of 110°C, extruded into strands having a diameter of about 3 mm, and processed into pellet shapes by a strand cutter. These were shaped by a T-die having a width of 400 mm into a sheet shape having a thickness of 0.03 mm.

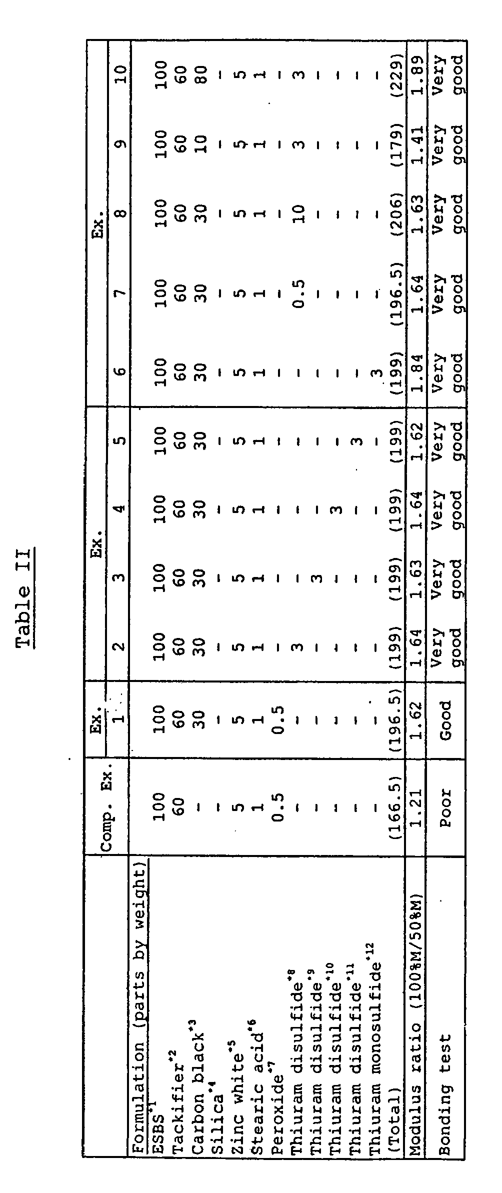

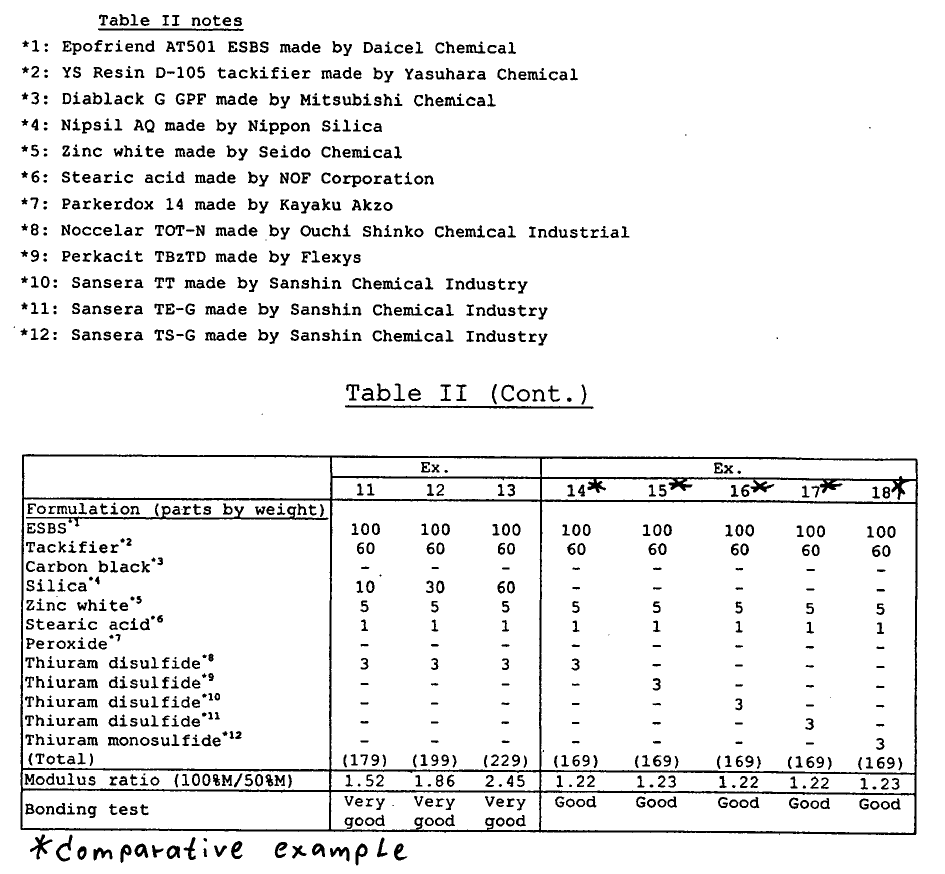

### Preparation of Carcass Rubber Layer

In each of the formulations shown in Table III, the compounding agents other than the vulcanization agent were mixed in a 1.7-liter Banbury mixer at a set temperature of 70°C for 5 minutes to obtain a master batch. Next, an 8-inch roll was used to mix the vulcanization agent to obtain a 2-mm thick unvulcanized rubber composition.

**Table IV**

| | | |
|---|---|---|
| NR | RSS#1 | 65 parts by weight |
| SBR | Nipol 1502 (made by Nippon Zeon) | 20 parts by weight |
| BR | Nipole BR1220 (made by Nippon Zeon) | 15 parts by weight |
| GPF carbon | Diablack G (Mitsubishi Chemical) | 50 parts by weight |
| Aromatic oil | Coumorex 300 (made by Nippon Oil) | 8 parts by weight |
| Zinc white | Zinc White No. 3 (Seido Chemical) | 5 parts by weight |
| RD | Nocrac 224 (Ouchi Shinko Chemical Industrial) | 1 part by weight |
| DM | Noccelar DM (Ouchi Shinko Chemical Industrial) | 1 part by weight |
| Sulfur | Gold Flower brand sulfur powder 150 mesh (Tsurumi Chemical) | 2 parts by weight |

### Preparation of Laminate Sample

Sheets of combinations of thermoplastic elastomers/adhesive compositions/carcass rubber layers cut into 15 cm x 15 cm were successively laminated and vulcanized at 170°C for 10 minutes to obtain laminates.

### Evaluation Test Method

Modulus ratio: Each adhesive composition alone of Table II was formed into a sheet having a thickness of 1 mm and measured by JIS K 6251 for moduli at the time of 50% and 100% elongation. Using the moduli thus measured, the value of the 100% modulus divided by the 50% modulus was used as the modulus ratio.

Bonding test: Each laminate sample was cut into a strip shape having a width of 25 mm and a length of 100 mm, then thermoplastic elastomer film was given a cut at its center in the width direction to prepare a sample. This was tested by an Uejima Seisakusho Dematia crack tester with a chuck distance of 60 mm, a stroke of 10 mm, and continuous tensile strain applied repeated 500,000 times, then the peeling of the film from the cut part was visually observed and evaluated as follows:
Very good: No peeling of film seen at all
Good: Very slight peeling of not more than 2 mm width from the cut seen (destroying material of rubber or adhesive)
Poor: Major peeling exceeding 2 mm width from cut occurred resulting in interfacial peeling

### INDUSTRIAL APPLICABILITY

According to the present invention, it is possible to obtain a laminate of a thermoplastic elastomer composition/an adhesive composition/an unvulcanized rubber composition having improved adhesiveness, and, therefore, the invention is useful as an air barrier layer of a pneumatic tire.

## Claims

1. A laminate comprising a layer of a thermoplastic elastomer (A) comprising an elastomer component dispersed in a thermoplastic resin matrix, a layer of an adhesive composition (B) comprising 100 parts by weight of a styrene-based copolymer having double bonds, 0.5 to 10 parts by weight of a vulcanization agent and/or a thiuram-based vulcanization accelerator and 10 to 80 parts by weight of a reinforcing filler and a layer of an unvulcanized rubber composition (C), the laminate being made integral at the time of vulcanization of rubber.

2. A laminate as claimed in claim 1, wherein the reinforcing filler of the adhesive composition (B) is carbon black or silica.

3. A laminate as claimed in claim 1 or 2, wherein a ratio of a 100% modulus to a 50% modulus of the adhesive composition (B) after vulcanization is 1.41 to 2.45.

4. A pneumatic tire using the laminate according to any one of claims 1 to 3.

## Patentansprüche

1. Ein Laminat, umfassend eine Schicht eines thermoplastischen Elastomers (A), welches eine Elastomerkomponente umfasst, die in einer Matrix aus thermoplastischem Harz dispergiert ist, eine Schicht einer Klebstoffzusammensetzung (B), welche 100 Gewichtsteile eines Copolymers auf der Basis von Styrol, welche Doppelbindungen aufweist, 0,5 bis 10 Gewichtsteile eines Vulkanisierungsmittels und/oder eines Vulkanisierungsbeschleunigers auf der Basis von Thiuram und 10 bis 80 Gewichtsteile eines verstärkenden Füllstoffes umfaßt, und eine Schicht einer nicht vulkanisierten Kautschukzusammensetzung (C), wobei das Laminat zum Zeitpunkt der Vulkanisierung des Kautschuks integral verbunden wird.

2. Ein Laminat wie in Anspruch 1 beansprucht, wobei der verstärkende Füllstoff der Klebstoffzusammsetzung (B) Ruß oder Siliziumdioxid ist.

3. Ein Laminat wie in Anspruch 1 oder 2 beansprucht, wobei das Verhältnis eines 100% Moduls zu einem 50% Modul der Klebstoffzusammensetzung (B) nach der Vulkanisierung 1,41 bis 2,45 beträgt.

4. Ein Luftreifen, der das Laminat gemäß einem der Ansprüche 1 bis 3 verwendet.

## Revendications

1. Laminé comprenant une couche d'un élastomère thermoplastique (A) comprenant un composant élastomère dispersé dans une matrice de résine thermoplastique, une couche d'une composition adhésive (B) comprenant 100 parties en poids d'un copolymère à base de styrène ayant des niaisons doubles, 0,5 à 10 parties en poids d'un agent de vulcanisation et/ou d'un accélérateur de vulcanisation à base de thiurame et 10 à 80 parties en poids d'une charge de renforcement et d'une couche d'une composition de caoutchouc non vulcanisée (C), le laminé étant rendu intégral au moment de la vulcanisation du caoutchouc.

2. Laminé selon la revendication 1, dans lequel la charge de renforcement de la composition adhésive (B) est le noir de carbone ou la silice.

3. Laminé selon la revendication 1 ou 2, dans lequel un rapport d'un module de 100% à un module de 50% de la composition adhésive (B) après la vulcanisation est de 1,41 à 2,45.

4. Bandage pneumatique utilisant le laminé selon l'une quelconque des revendications 1 à 3.
